# EUROPÄISCHE PATENTANMELDUNG

(11) **EP 0 737 604 A2**
(43) Veröffentlichungstag der Anmeldung: **16.10.1996**
(21) Anmeldenummer: 96103035.0
(22) Anmeldetag: 29.02.1996
(51) Int. Cl.: B60R 21/00, B60R 19/40, B60R 21/08

(54) **Unfallschutz bei Omnibussen**

(30) Priorität: 12.04.1995 DE 19513873
(71) Anmelder: MAN Nutzfahrzeuge Aktiengesellschaft, 80976 München (DE)
(72) Erfinder: Rieck, Gerhard, Dipl.-Ing., 81247 München (DE); Krimmling, Harald, Dipl.-Ing., 85250 Altomünster (DE); Graf, Matthias, 80992 München (DE)

(57) **Zusammenfassung**

Die Erfindung betrifft die Sicherung von Überlebensraum und Maßnahmen zur Verringerung von unfallbedingten Verzögerungs-Beschleunigungen von Fahrgästen in Omnibussen. Der seitlich verbesserte Schutz für die Fahrgäste wird durch Seitenwände (10, 10'), die ausfahrbar (12, 12') gestaltet sind und durch Dachkanten (15, 15'), die ebenfalls ausfahrbar (16, 16') gestaltet sind, erreicht. Weiterhin sind im Fensterbereich (17, 17') ausfahrbare Sonnenrollos (21, 21') gelagert, die entsprechend stabil ausgestaltet sind, so daß sie in Stellung (18, 18') ein Herausfallen von Personen verhindern. Ein weiterer Überlebensraum wird durch herausfahrbare und besonders geeignete Abstützung (27, 27') der Kopfstützen (26') erreicht. Zur Verringerung der Verzögerung an den Fahrgastsitzen (30) sind die Sitzlagerungen (31, 32, 40, 50) plastisch verformbar ausgestaltet. Der Fahrersitz (60) ist rückwärts bewegbar ausgestaltet. Die Sensierung für die zentrale Auslösung geschieht mittels mehrerer, z. B., Beschleunigungssensoren.

## Beschreibung

Die Erfindung bezieht sich auf eine Vorrichtung gemäß den Oberbegriffen der Ansprüche 1, 8 und 14.

Es ist bekannt, daß, wenn Omnibusse von der Fahrbahn abkommen, seitlich kippen, vielleicht noch überrollen oder gegen ein Hindernis auffahren, die Unfallfolgen bezüglich Personenschäden oft schlimm sind.

Aus der DE 40 09 244 A1 ist bekannt, daß seitlich aufblasbare Kissen, sensiert über die Neigung des Fahrzeuges, das Fahrzeug beim seitlichen Kippen elastisch auffangen. Nachteil dieser Lösung ist, daß bei höherer Fahrzeuggeschwindigkeit die Kissen leicht aufreißen und dann die Wirkung der Kissen, nämlich das seitliche Abfedern des Fahrzeuges, nicht mehr vorhanden ist.

Aus der DE 40 05 892 C1 ist eine Vorrichtung bekannt, mittels der eine seitlich angeordnete Schiebetüre die, bei Erkennung eines bevorstehenden Unfalles, in Fahrzeugquerrichtung ausschwenkbar angeordnet ist. Die Vorrichtung ist für Fahrzeuge gedacht, bei denen im Türbereich Personen sitzen. Der Türbereich ist bei diesen Fahrzeugen aus baulichen Gründen ein Schwachbereich. Die Wirksamkeit der oben genannten Vorrichtung ist deshalb auch nur bei derartigen Fahrzeugen gegeben.

Eine Sicherheitsmaßnahme in Omnibussen kann das Tragen von Sicherheitsgurten an jedem Fahrgastsitz sein.

Der Erfindung liegt die Aufgabe zugrunde, eine Vorrichtung zu schaffen, die über die Schutzwirkung von Sicherheitsgurten hinaus die Sicherheit von Fahrgästen erhöht.

Die Aufgabe wird erfindungsgemäß durch die Merkmale der Ansprüche 1, 8 und 14 gelöst.

Durch seitlich am Fahrzeug ausfahrbare Mittel läßt sich Aufprallenergie absorbierend abfangen, so daß Beschleunigungen in ihrer Höhe reduziert in den Aufbau gelangen. Außerdem wird die Gefahr des Brechens der Fensterscheiben verringert. In besonderen Fällen kann sogar die Gefahr des Kippens oder Überrollens des Fahrzeuges dadurch verringert werden, daß im Endbereich eines Unfallherganges, z. B. durch die Folgen von Verformungen von energieverzehrenden Mitteln, nicht mehr genügend Energie für ein Kippen oder Überrollen des Fahrzeuges zur Verfügung steht.

Eine Ausgestaltung der Erfindung sind seitlich ausfahrbare Wandungen, die längs geteilt oder in einem Stück, durch entsprechende Mechanismen ausfahrbar sind.

Nach einer weiteren Ausgestaltung ist der Dachkantenbereich links und rechts, längs des Fahrzeuges geteilt oder in einem Stück ausfahrbar gestaltet.

Eine weitere Ausgestaltung der Erfindung sind ausfahrbare Sonnenrollos, deren Ausführung, Lagerung und Führung so ausgelegt sind, daß sie im ausgefahrenen Zustand einen wirksamen Schutz vor dem Herausfallen von Personen aus dem Omnibus bieten. Zufällig nicht angegurtete Personen, oder bei Personen deren Gurt infolge von Überbelastung abriß, werden dadurch wirkungsvoll zumindest vor dem Herausfallen geschützt. Weiterhin wird durch diese ausfahrbaren Sonnenrollos ein Herumfliegen von gebrochenen Fensterscheiben im Fahrgastraum während des Unfallherganges verhindert. Die Sonnenrollos sind nach dem Unfallhergang handbetätigt rückführbar bzw. wegnehmbar ausgestaltet.

Eine weitere Maßnahme zur Erhöhung der Sicherheit sind Maßnahmen an den Sitzen von Omnibussen. Eine Maßnahme besteht darin, daß die ausfahrbaren Kopfstützen Verlängerungen haben, die im ausgefahrenen Zustand eine Überdeckung mit der Sitzlehne aufweisen. Dadurch wird eine unzerklüftete Fläche auf der Rückseite des Sitzes geschaffen, die die Reisenden, im Falle eines Aufpralles auf die Sitzlehne, schützen. Der Verbund, bestehend aus Sitz mit Sitzlehne und ausgefahrenen Kopfstützen mit den Verlängerungen hin zur Sitzlehne, kann als besonders steifer Verbund ausgebildet werden, so daß ein Überlebensraum geschaffen wird. Besonders bei einem Überschlag des Fahrzeuges ist dieser vergrößerte Überlebensraum wichtig, da das Dach des Fahrzeuges im Extremfall bis zur Höhe der Kopfstützen heruntergedrückt werden kann.

Gemäß einer weiteren Ausgestaltung der Erfindung sind die Sitzkonsolen plastisch, unter Vernichtung von Energie, verformbar. Bei großen Fahrzeugverzögerungen in Fahrzeuglängsrichtung werden die Beschleunigungswerte, durch die Verformbarkeit der Sitzkonsolen, die bewirken, daß der Fahrgastsitz in Fahrtrichtung nach vorne bewegbar ist, herabgesetzt. Die gewünschte Steifigkeit der Sitze entgegen der Fahrtrichtung wird durch Zuganker in den Sitzkonsolen, die ein Aufweiten der Wellungen in den Konsolen vermeiden, erreicht. Zusammen mit den Kopfstützen, die im ausgefahrenen Zustand mit den Schürzen und der Sitzlehne einen steifen Verband bilden, ergeben sich an den Fahrgastsitzen, sowohl durch die geringerten Verzögerungswerte als auch durch Schaffung von Überlebensraum, große Chancen zum Überleben der Fahrgäste bei einem Unfall.

In einer weiteren Ausgestaltung der Erfindung ist der Fahrersitz auf dem Bodengerippe, z. B. mittels eines definierten Reibschlusses in horizontaler Richtung und eines Organs zum Verschieben des Sitzes, nach rückwärts bewegbar. Dadurch wird erreicht, daß für den Fahrer mehr Überlebensraum geschaffen wird.

Die Sensierung für die automatische Auslösung der Betätigungsvorrichtungen der erfindungsgemäßen Vorrichtungen zur Erhöhung der Sicherheit, kann z. B. über mehrere Beschleunigungssensoren an kritischen Stellen oder/und über Sensoren, die kritische Fahrzustände erfassen, erfolgen. Die Werte der Sensoren werden vorteilhafter Weise in einem zentralen Rechner verarbeitet, der die entsprechenden Signale für die Auslösung der Betätigungsvorrichtungen ausgibt.

In der Zeichnung sind Ausführungsbeispiele der Erfindung schematisch dargestellt. Es zeigen:
- Fig. 1: ein Ausführungsbeispiel in der Vorderansicht eines Omnibusses,
- Fig. 2: einen Fahrgastsitz in Vorderansicht,
- Fig. 3: einen Fahrgastsitz in Seitenansicht,
- Fig. 4: eine Ausführung einer Sitzkonsole in Vorderansicht,
- Fig. 5: eine Ausführung einer Sitzkonsole in Seitenansicht,

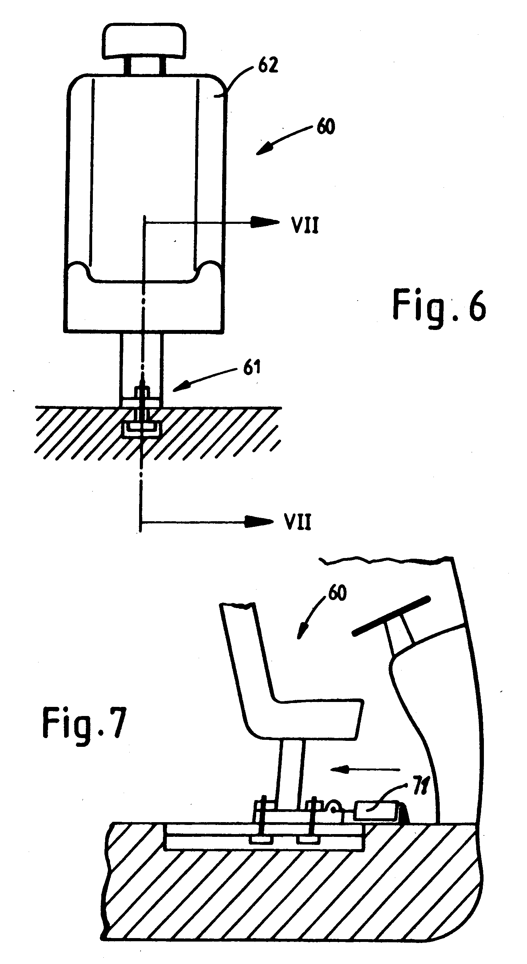

- Fig. 6: einen Fahrersitz in Vorderansicht,
- Fig. 7: einen Fahrersitz in Seitenansicht.

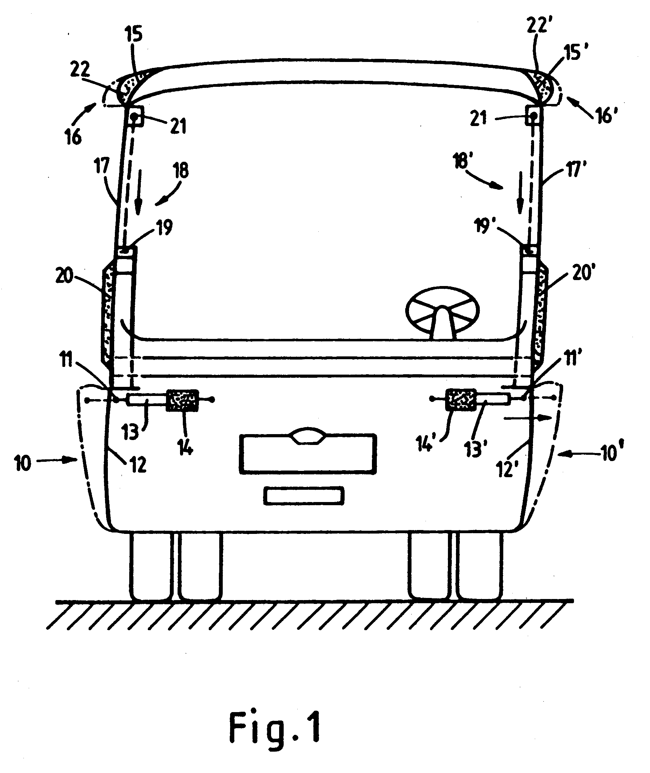

Fig. 1 zeigt die Vorderansicht eines Omnibusses mit den erfindungsgemäßen Mitteln 10, 10', 16, 16', 18, 18'. Die ausfahrbaren Mittel 10, 10' können Kofferraumklappen 12, 12' sein, die einschließlich ihrer Lagerung 11, 11' ausfahrbar sind. Die Betätigungsvorrichtungen können pyrotechnische Mittel oder Hydraulik- oder Pneumatikzylinder 13, 13' sein, die, entweder integriert oder extern nachgeschaltet, energieverzehrende Mittel 14, 14' aufweisen. Die Kofferraumklappen werden im Normalfall zur Bedienung um die Lagerpunkte 11, 11' geschwenkt.

In Bereichen von Seitenwänden, die keine Kofferraumklappen aufweisen, kann die Ausfahrbarkeit analog der beschriebenen ausgestaltet sein.

Nach einer weiteren Ausgestaltung der Erfindung sind ausfahrbare Dachkanten 16, 16' vorgesehen. Die Betätigungsvorrichtungen können analog zu denen ausgeführt sein, die für das Ausfahren der Kofferraumklappen vorgesehen sind.

Nach einer weiteren Ausgestaltung der Erfindung sind die Sonnenrollos 18, 18', 21, 21' so ausgestaltet, daß sie auch zwangsgesteuert ausfahrbar sind und dann als Fangschutz in zweifacher Weise dienen. Zum einen dienen sie als Fangschutz gegen ein Herausfallen von Personen, die vor einem Unfallhergang nicht angegurtet waren, zum anderen dienen sie als Fangschutz für gebrochene Fensterscheiben oder anderen Teilen, die von außen in den Fahrgastraum streben, wie z. B. Steine oder Holzteile. Die Sonnenrollos 18, 18', 21, 21' müssen entsprechend ausgeführt sein, damit die Wirkung, die sie erreichen sollen, auch erreicht wird. Ebenso muß die Lagerung 21, 21', die Seitenführung und die Arretierung 19, 19' der Rollos, entsprechend ausgestaltet sein. Die Rollos müssen aus jeder Stellung, in der sie eingestellt sind, über die zentrale Auslösung ausfahrbar und arretierbar in den Halterungen 19, 19' sein. Nach dem Unfallhergang müssen die Rollos 18, 18', 21, 21' von Hand wieder rückführbar bzw. wegnehmbar sein, um Fluchtwege freizugeben. Dies kann z. B. dadurch erfolgen, daß die Arretiervorrichtungen 19, 19' die Rollos wieder aus den Arretierungen herausdrücken und gleichzeitig die Führungsschienen der Rollos von den Verbindungen mit dem Fahrzeug gelöst werden, oder daß dafür vorgesehene Rahmen, die die Rollos 18, 18', deren Lagerungen 21, 21', Führungen und Arretierungen 19, 19' beinhalten, vom Fahrzeug lösbar sind.

Nach einer weiteren Ausgestaltung der Erfindung sind Maßnahmen an den Sitzen 25, 30, 40, 50 von Fahrgästen vorgesehen. Die Kopfstützen 26, die ausfahrbar sind, sind mit Schürzen 27, 27' ausgerüstet. Im ausgefahrenen Zustand 26' bilden die Schürzen 27, 27' eine Überdeckung 29 mit der Sitzlehne 28, so daß für Personen, die in der nächst hinteren Sitzreihe sitzen, eine unzerklüftete Fläche vorhanden ist, die diese Personen im Falle eines Unfalles schützt. Die Überdeckung 29 kann auch dazu genutzt werden, daß ein besonders steifer Verband zwischen ausgefahrenen Kopfstützen 26' und der Sitzlehne 28 über die Schürzen 27, 27' und die Halterungen 26'' der Kopfstützen 26' gebildet wird. Zusammen mit einer zur Sitzlehne 28 steif verbundenen Sitzfläche 29 ergibt die Ausgestaltung des Sitzes 25, 30 eine Sicherung des Überlebensraumes, wenn z. B. das Busdach weggedrückt wird. Zusätzlich sind die Sitzkonsolen 32, 35, 40, 50 nachgiebig und energieverzehrend ausgeführt. Eine mögliche Ausgestaltung sind die Sitzkonsolen 32, 35 in ihrer Art und gemeinsamen Anordnung. Die Sitzkonsole 35 hat ein, nur in Druckrichtung energieverzehrendes und verformbares Mittel 31 eingebaut, so daß die plastisch verformte Form 31' erreichbar ist. Dabei wird das Konsolteil 33 in das energieverzehrende Mittel 31 eingeschoben. Bei einer großen Verzögerung des Fahrzeuges in horizontaler Richtung verformen sich die Sitzkonsolen 35, 32 in die Formen 31', 32', so daß der Sitz 30 in die Lage 33' gebracht wird. Dieser Effekt hat den Vorteil, daß, unter Vernichtung von Energie, die Beschleunigung am Sitz wesentlich niedriger ist, als die im Fahrzeugaufbau. Eine ähnliche Wirkung haben die Sitzkonsolen 40, 50. Diese Sitzkonsolen haben Soll-Nachgiebigkeitsstellen 43, 44 in Form einer Wellung des Materials, wobei an der Vorderseite 48 der Konsolen 40, 50 die Wellung 43, 44 groß ist und auf der Rückseite 46 der Konsolen 40, 50 auf Null geht. Weitere Wellungen 45, 45' sind an den Gurten 41, 42 der Vorderseiten der Konsolen 40, 50 vorgesehen. Die plastische Verformbarkeit der Konsolen 40, 50 ist so, daß der Fahrgastsitz aus der Lage 51 in die Lage 52, infolge hoher Beanspruchung unter Vernichtung von Energie und die Beschleunigungen reduzierend, gebracht wird. Die gewünschte Steifigkeit der Sitze entgegen der Fahrtrichtung wird durch Zuganker 47, 47' in den Sitzkonsolen 40, 50, die ein Aufweiten der Wellungen 43, 44, 45, 45' in den Sitzkonsolen 40, 50 vermeiden, erreicht. Das Material für die Sitzkonsolen 40, 50 ist vorzugsweise Stahlblech.

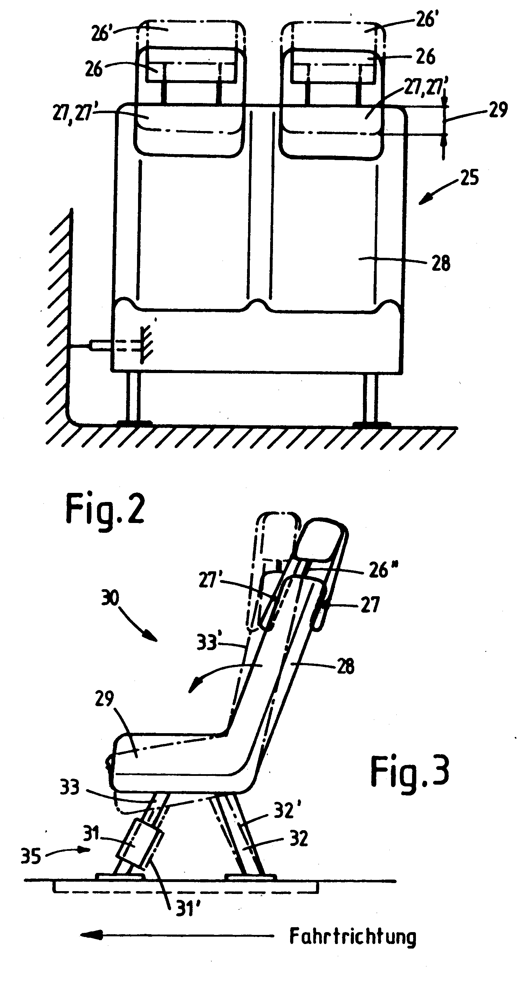

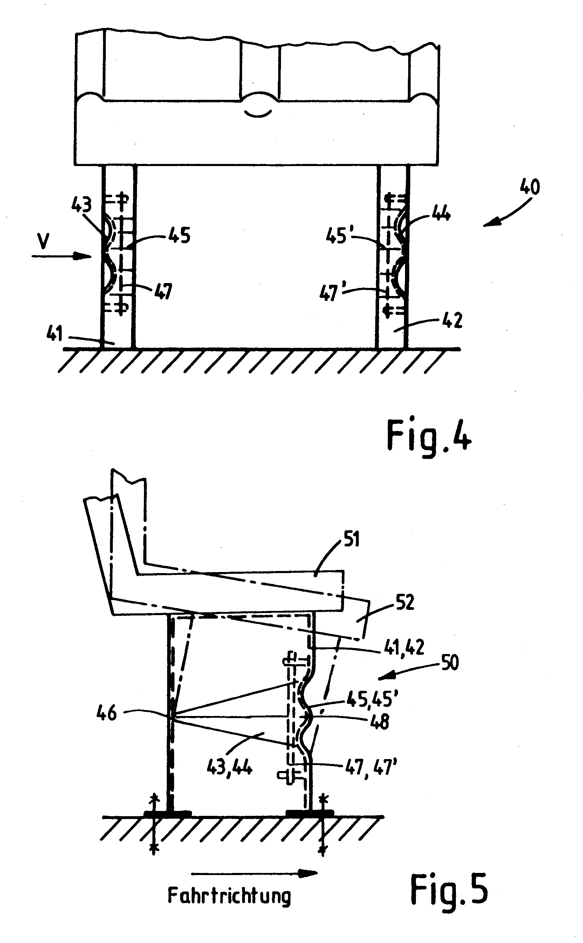

Ein weiterer Vorteil der Ausführungen der Sitzkonsolen nach Fig. 3 und 4 ist, daß infolge der verringerten Verzögerungen der Fahrgastsitze durch die Verformbarkeit der Sitzkonsolen, die Beanspruchung der Befestigung der Sitzkonsolen am Busboden erheblich verringert wird und dadurch ein Ausreißen oder Abreißen der Befestigungsschrauben ausgeschlossen wird.

Nach einer weiteren Ausgestaltung der Erfindung sind unter den Fensterbereichen 17, 17' und an den Dachkanten 15, 15' energieverzehrende Schichten 20, 20', 22, 22' angebracht bzw. aufgebracht. Die Schichten 20, 20', 22, 22' können z. B. Polyurethan-Schäume oder Metallschäume mit geschlossenen Oberflächen und porigem Innenbereich sein, die an den Seitenwandungen des Busses aufgeklebt werden. Falls das Fahrzeug bei einem Unfallhergang seitlich an Gegenständen entlanggleitet, kann mit den Schichten 20, 20', 22, 22' Energie vernichtet werden und ein folgender Frontalaufprall o. ä. wesentlich ungefährlicher verlaufen.

Nach einer weiteren, erfindungsgemäßen Vorrichtung ist der Fahrersitz 60 auf dem Bodengerippe rückwärts bewegbar und kann den Fahrer aus der Gefahrenzone wegbringen. In einer vorteilhaften Ausgestaltung wird die Klemmung 61, die z. B. mittels Hammerschrauben und Muttern erreichbar ist, durch einen Pneumatik- oder Hydraulikzylinder 71 überdrückt und der Sitz 60 nach rückwärts bewegt.

Die Erfassung von kritischen Bewegungszuständen des Omnibusses erfolgt vorzugsweise mittels mindestens zweier Sensoren, z. B. mittels eines Beschleunigungssensors in Fahrtrichtung messend, am Fahrzeugbug angebracht und eines Beschleunigungssensors quer zur Fahrtrichtung messend, in der Mitte des Fahrzeuges angebracht. Es kann auch zusätzlich ein Kreisel, der die Lage und die Lageänderung des Fahrzeuges mißt, im z. B. Armaturenbrett vorgesehen werden. Ein Beschleunigungssensor und ein Kreise ergeben ebenfalls eine gute Sensierung. Die Signale der Sensoren werden in vorteilhafter Weise zentral in einem Rechner verarbeitet. Von diesem Rechner gehen die Signale zum Auslösen der Betätigungsvorrichtungen für die ausfahrbaren Sicherheitsvorrichtungen, wobei auch ein kritisches Signal eines Sensors ausreichen soll, alle Betätigungsvorrichtungen zu aktivieren, aus.

## Patentansprüche

1. Vorrichtung zur Erhöhung der Sicherheit von Omnibussen, dadurch gekennzeichnet, daß an den Seitenwänden zum Schutz von Insassen Mittel (10, 10', 16, 16', 18, 18') vorgesehen sind, die ausfahrbar sind.

2. Vorrichtung nach Anspruch 1, dadurch gekennzeichnet, daß Bereiche der Seitenwände (10, 10') und/oder Dachkanten (16, 16') längsseitig des Fahrzeuges, quer zur Fahrzeuglängsachse, ausfahrbar sind.

3. Vorrichtung nach Anspruch 2, dadurch gekennzeichnet, daß im Bereich der Kofferraumklappen (10, 10') die Kofferraumklappen (10, 10') einschließlich ihrer Lagerungen (11, 11') ausfahrbar sind.

4. Vorrichtung nach Anspruch 2 und 3, dadurch gekennzeichnet, daß in der Wirklinie der Bewegung des Ausfahrens der Bereiche der Seitenwände energieverzehrende Mittel (14, 14') eingesetzt sind.

5. Vorrichtung nach Anspruch 1, an mit Sonnenrollos an Fenstern ausgestatteten Omnibussen, dadurch gekennzeichnet, daß die Sonnenrollos (18, 18', 21, 21') so ausgestaltet sind, daß sie auch als Fangschutz gegen ein Herausfallen von Personen und gegen ein Eindringen in den Fahrgastraum von zerbrochenem Fensterglas nutzbar sind.

6. Vorrichtung nach Anspruch 5, dadurch gekennzeichnet, daß die Sonnenrollos (18, 18', 21, 21'), in welcher Stellung sie auch immer sind, zwangsgesteuert ausfahrbar sind.

7. Vorrichtung nach den Ansprüchen 5 und 6, dadurch gekennzeichnet, daß die Sonnenrollos (18, 18') nach einem Unfall von Hand wegnehmbar sind, um Fluchtwege freizugeben.

8. Vorrichtung zur Erhöhung der Sicherheit von Omnibussen, dadurch gekennzeichnet, daß zum Schutz von Insassen Maßnahmen an den Sitzen (25, 30, 40, 50, 60) vorgesehen sind.

9. Vorrichtung nach Anspruch 8, dadurch gekennzeichnet, daß der Fahrersitz (60) auf dem Bodengerippe rückwärts bewegbar ist.

10. Vorrichtung nach Anspruch 8, dadurch gekennzeichnet, daß die Kopfstützen (26) im ausgefahrenen Zustand (26') mit der Sitzlehne (28) Überdeckungen (29) aufweisen und Schürze (27, 27') und Abstützung (26'') der Kopfstützen (26') und Rückenlehne (28) einen besonders steifen Verband und eine möglichst unzerklüftete Fläche bilden.

11. Vorrichtung nach Anspruch 8, dadurch gekennzeichnet, daß die Sitzkonsolen (32, 35, 40, 50) plastisch und energieverzehrend nur so verformbar sind, daß die Fahrgastsitze (30, 51) nur in Fahrzeuglängsrichtung nach vorne in einer Art Winkelbewegung in eine veränderte Lage (33, 52) eingeschränkt bewegbar sind.

12. Vorrichtung nach Anspruch 11, dadurch gekennzeichnet, daß die Sitzkonsolen (32, 35, 41, 42) deformierbare, energieverzehrende Mittel (31) aufweisen, oder aus Stahlblech (40, 50) so ausgestaltet sind, daß sie durch Soll-Nachgiebigkeitsstellen (43, 44) unter Verzehrung von Energie plastisch verformbar sind.

13. Vorrichtung nach den Ansprüchen 1 bis 12, dadurch gekennzeichnet, daß zur Auslösung der Betätigungsvorrichtungen mindestens eine Beschleunigungssensierung in Fahrzeuglängsrichtung und eine Sensierung der Querneigung des Omnibusses erfolgt, wobei die Signale in einer Zentrale verarbeitet werden und die Betätigungsvorrichtungen von dort aus mittels entsprechender Signale auslösbar sind.

14. Vorrichtung zur Erhöhung der Sicherheit von Omnibussen, dadurch gekennzeichnet, daß im Außenbereich, unterhalb der Fenster (17, 17') und im Dachkantenbereich (15, 15') energieverzehrende Schichten (20, 20', 22, 22') längs des Fahrzeugesangebracht bzw. aufgebracht sind.
